# EUROPÄISCHE PATENTSCHRIFT

(11) **EP 4 168 159 B1**
(45) Veröffentlichungstag und Bekanntmachung des Hinweises auf die Patenterteilung: **23.10.2024**
(21) Anmeldenummer: 21730130.8
(22) Anmeldetag: 26.05.2021
(51) Int. Cl.: B01D 63/02, B01D 63/04, B01D 65/08

(54) **LEITUNGSANORDNUNG FÜR EIN FILTRATIONSSYSTEM**
PIPING STRUCTURE FOR A FILTRATION SYSTEM
STRUCTURE DE CANALISATION POUR SYSTEME DE FILTRATION

(30) Priorität: 18.06.2020 DE 102020116184
(43) Veröffentlichungstag der Anmeldung: 26.04.2023
(73) Patentinhaber: Fresenius Medical Care Deutschland GmbH, 61352 Bad Homburg (DE)
(72) Erfinder: HEINZ, Thomas, 66606 St. Wendel (DE); WEHMEYER, Wolfgang, 84030 Ergolding (DE)
(74) Vertreter: Stolmár & Partner Patentanwälte PartG mbB
(86) Internationale Anmeldenummer: PCT/EP2021/064105
(87) Internationale Veröffentlichungsnummer: WO 2021/254755

(56) Entgegenhaltungen:
- WO-A1-2005/046849
- WO-A1-96/41676
- JP-A- 2001 269 546
- US-A1- 2004 045 893

## Beschreibung

### Gebiet der Erfindung

Die Erfindung betrifft eine Leitungsanordnung für ein Filtrationssystem zum Filtrieren von Flüssigkeiten.

### Stand der Technik

Es sind verschiedene Filtersysteme bekannt, die bspw. für industrielle Zwecke Fluide filtern und das gefilterte Fluid wieder ableiten. Da bei industriellen Zwecken oft eine große Menge Filtrat bereitgestellt werden muss ist es vorteilhaft, mehrere Filtermodule zu verwenden und dadurch die Filtratmenge zu erhöhen. Ein solches Filtersystem ist beispielsweise in der WO 2013/048801 A1 offenbart. Dieses umfasst eine Filtermodulanordnung, die einen Behälter mit einer darin angeordneten Filterpatrone und einen mit einem Ende des Behälters gekoppelten Sammler umfasst, wobei der Kopf ein Gehäuse mit einem offenen oberen Ende und einem unteren Ende sowie eine Endkappe enthält. Ein Abschnitt, der auf eine komplementäre Struktur passt, die durch das Innere des gesamten offenen oberen Endes des Gehäuses definiert ist, so dass er entfernbar mit dem Gehäuse und der Endkappe in Eingriff kommt, definiert einen Durchgang, durch den Flüssigkeit aus dem Behälter herausfließen kann. Die Filtermodulanordnung ermöglicht eine Verteileranordnung, die verwendet wird, um Flüssigkeiten zu und von einem Filtersystem zu fördern, das mehrere solcher Module umfasst. Nachteilig ist jedoch, dass die Leitung zum Abführen der Flüssigkeit entfernt von der Filterpatrone angeordnet sind und auch sein müssen, weil sonst die Gefahr besteht, dass durch die Strömung der Filter beschädigt wird. Dies ist auch der Fall, wenn Dead-End Filter gereinigt werden sollen, also Durchflussfilter, die den gesamten Querschnitt der Zuführleitung belegen und bei denen es keine Querleitung gibt, die die gefilterten Bestandteile dann durch eine Seitenströmung aus dem Filter entfernen. Denn bei einer Reinigung wird der Fluidfluss umgekehrt und der Filter in Gegenrichtung "durchgewaschen". Auch wenn also das Reinigungsfluid aus der Gegenrichtung in den Filter gepresst wird, wird dieser ebenfalls stark beansprucht. Deswegen muss die Leitung zum Abführen der Flüssigkeit weiter vom Filter entfernt sein, weswegen das Filtersystem relativ viel Platz benötigt.

Die JP 2001 269 546 A offenbart eine Filtervorrichtung mit Fasermembranen, die für die Filtrierung von Wasser vorgesehen ist. Das Rohwasser wird durch die Fasern gefiltert, nach oben in eine Kammer gefördert und dort durch eine Filtratleitung entfernt. Das übrige Rohwasser wird durch Löcher in der Filterwand über einen Kreislaufwasserauslass in den Rohwasserkreislauf zurückgeführt.

Die WO 96/41676 A1 offenbart einen Filter mit einer Anordnung von Bündeln offener Filterrohre, die jeweils in einem Trägerrohr untergebracht sind und sich über dessen Länge erstrecken. Filterrohrdichtungen sind an jedem Ende jedes Stützrohrs so angeordnet, dass sich die Filterrohre durch sie hindurch erstrecken, wobei die Dichtungen einen axialen Durchfluss durch die Enden der Stützrohre verhindern. Ein rohrförmiges Gehäuse nimmt jedes Stützrohr auf. Axial beabstandete, ringförmige Dichtungen zwischen jedem Stützrohr und dem zugehörigen Gehäuse unterteilen den zwischen dem Stützrohr und dem Gehäuse entstehenden Raum in axial beabstandete Bereiche, die mit den jeweiligen Leitungen in Verbindung stehen. Öffnungen in den Stützrohren stehen durch die Zwischenräume zwischen dem Gehäuse und den Stützrohren mit den jeweiligen Leitungen in Verbindung. Eine der Öffnungen in jedem Stützrohr steht mit den offenen Enden der Filterrohre in Verbindung, eine andere mit dem Raum innerhalb des Stützrohrs um die Filterrohre herum und zwischen den Dichtungen der Filterrohre. Die Gehäuse haben abnehmbare Deckel, die nach dem Entfernen Öffnungen freilassen, die axial mit den Stützrohren ausgerichtet sind, um das Einsetzen und Herausnehmen der Stützrohre in axialer Richtung zu ermöglichen. Die Abdeckungen können transparent sein, um eine visuelle Inspektion des Durchflusses in den Stützrohren zu ermöglichen, und die Gehäuse können südliche Stopfen enthalten um die selektive Isolierung einzelner Rohrbündel zu ermöglichen.

### Darstellung der Erfindung

Aufgabe der Erfindung ist es, ein platzsparendes Filtermodul bereitzustellen, bei der gleichzeitig eine Beschädigung des Filters durch den Strömungssog der Hauptströmungsleitung vermieden wird. Diese Aufgabe wird durch eine Leitungsanordnung nach Anspruch 1 gelöst. Weitere, die Erfindung ausgestaltende Merkmale sind in den abhängigen Ansprüchen enthalten.

Eine erfindungsgemäße Leitungsanordnung für ein Filtrationssystem zum Filtrieren von Flüssigkeiten, umfasst zumindest eine Zuführleitung, die einen Filter aufweist, durch den das in der Zuführleitung geförderte Fluid gefiltert wird und der die Zuführleitung in einen Rohfluidbereich und einen Filtratbereich teilt, wobei die Zuführleitung im Filtratbereich einen Auslassabschnitt aufweist, der durch eine oder mehrere Auslassöffnungen in einer Rohrwand der Zuführleitung ausgebildet ist, eine Filtratsammelleitung, die das Filtrat aus dem Filtratbereich der Zuführleitung aufnimmt und ableitet, wobei die Filtratsammelleitung in der Höhe des Filtratbereichs der Zuführleitung angeordnet ist; und ein Verbindungselement, das die Filtratsammelleitung mit dem Auslassabschnitt der Zuführleitung verbindet, wobei das Filtrat aus dem Filtratbereich über das Verbindungselement in die Filtratsammelleitung gelangt und wobei das Verbindungselement einen Spaltbereich aufweist und die Auslassöffnungen ausschließlich an dem Spaltbereich vorgesehen sind. Durch die Anordnung der Filtratsammelleitung am Filtratbereich wird einerseits Platz gespart und andererseits durch das Abschirmen der Auslassöffnungen durch das Verbindungselement der Filter vor der Strömung im Filtratsammelrohr oder auch vor der Strömung bei der Reinigung des Filters mit einer Spülung in Gegenrichtung geschützt.

Die Strömungsrichtung des Fluids im Filtersammelrohr am Verbindungselement ist vorzugsweise quer, insbesondere senkrecht zum Filtratbereich der Zuführleitung angeordnet. Dadurch wird eine platzsparende Anordnung für ein Vielzahl von Leitungsanordnungen ermöglicht.

Der Auslassabschnitt fasst zumindest ein Viertel des Umfangs des Filtratsbereichs ein, insbesondere die Hälfte oder drei Viertel.

Das Verbindungselement kann sowohl mit dem Filtratbereich der Zuführleitung als auch mit der Filtratsammelleitung einstückig ausgebildet sein. Besonders bevorzugt ist es aber, wenn das Verbindungselement als separates Element ausgebildet ist. Dadurch kann das Verbindungselement einfacher für verschiedene Ausführungsformen der Erfindung angepasst werden (bspw. symmetrisch, asymmetrisch).

Die Zuführleitung kann ferner eine Vielzahl von Filtratbereichen umfassen, die in Reihe jeweils mit der Filtratsammelleitung verbunden sind. Das erhöht den Durchsatz der Filtratherstellung. Die Filtratbereiche können mit nur einer oder auch mehreren Rohfluidzuführleitungen verbunden sein, um das Rohfluid zu den Filtern und den Filtratbereichen zu fördern.

Der Querschnitt der Filtratsammelleitung überlappt vorzugsweise mit dem Filtratbereich der Zuführleitung, insbesondere so, dass die Mittelachsen der Filtratsammelleitung und der Zuführleitung sich schneiden. Dadurch kann der Platzbedarf der der Filteranlage weiter reduziert werden.

Der Auslassabschnitt des Filtratbereichs ist insbesondere benachbart zum Filter angeordnet. Auch dadurch kann der Platzbedarf weiter reduziert werden, weil das Filtrat unmittelbar nach dem Filtern abgeführt werden kann.

Die Leitungsanordnung kann ferner zumindest eine zweite Filtratsammelleitung und einen zweiten Auslassabschnitt umfassen, der beabstandet zum ersten Auslassabschnitt im Filtratbereich angeordnet ist, wobei die zweite Filtratsammelleitung mit dem zweiten Auslassabschnitt verbunden ist. Dadurch kann der Durchsatz erhöht werden, oder die Filtratsammelleitungen können mit einem geringeren Durchmesser ausgebildet sein, was wiederum eine kompaktere Bauweise unterstützt.

Die Leitungsanordnung umfassen ferner bevorzugt zumindest eine zweite Filtratsammelleitung, die über das Verbindungselement der ersten Filtratsammelleitung mit dem Auslassabschnitt verbunden ist.

Bevorzugt verjüngt sich der Spaltbereich des Verbindungselements zumindest am Auslassabschnitt. Die Verjüngung ist insbesondere zum Filter hin ausgebildet, so dass der Großteil des Filtrats weiter entfernt vom Filter in das Filtratsammelrohr abgeleitet wird und der Filter einer geringeren Strömungskraft ausgesetzt ist.

Zumindest ein Teil der Aussparungen am Auslassabschnitt können schlitzförmig ausgebildet sein.

Die Auslassöffnung oder die Auslassöffnungen am Filtratbereich ist vorzugsweise nach innen versetzt ausgebildet. Dadurch wird die Montage und Befestigung des Verbindungselements erleichtert.

### Kurze Beschreibung der Figuren

Figur 1a zeigt eine isometrische Ansicht auf einen Querschnitt durch das Verbindungselement und durch den Auslassabschnitt einer Ausführungsform der Erfindung;
Figur 1b zeigt einen Längsschnitt durch das Verbindungselement und durch den Auslassabschnitt aus Figur 1a;
Figur 1c zeigt einen Querschnitt durch das Verbindungselement und durch den Auslassabschnitt aus Figur 1a;
Figur 2 zeigt eine isometrische Ansicht auf einen Querschnitt durch das Verbindungselement und durch den Auslassabschnitt einer Ausführungsform der Erfindung;
Figuren 3a und 3b zeigen eine isometrische Ansicht auf eine Zuführleitung mit zwei unterschiedlichen Auslassabschnitten;
Figuren 4a bis 4g zeigen schematische Darstellungen verschiedener Anordnungen des Rohfluidbereichs der Zuführleitung und der Filtratsammelleitung(en);
Figur 5a zeigt eine schematische Darstellung einer teilweisen Überlappung des Querschnitts einer Filtratsammelleitung mit dem Filtratbereich der Zuführleitung;
Figur 5b zeigt eine schematische Darstellung ohne Überlappung des Querschnitts einer Filtratsammelleitung mit dem Filtratbereich der Zuführleitung;
Figuren 6a bis 6d zeigen die Anordnungen der Auslassabschnitte in der Zuführleitung in Abhängigkeit der Anordnung der Filtratsammelleitung;
Figur 7 zeigt beispielhaft eine Kombination verschiedener Ausführungsformen aus Figur 6a bis 6d; und
Figuren 8a und 8b zeigen Anordnungen von Verbindungselementen mit unterschiedlicher Anzahl von Filtratsammelleitungen an einer Zuführleitung.

### Beschreibung der bevorzugten Ausführungsformen

Eine erfindungsgemäße Leitungsanordnung 10 umfasst eine Zuführleitung, eine Filtratsammelleitung 80 und ein Verbindungselement 60, das die Zuführleitung mit der Filtratsammelleitung 80 verbindet. Die Zuführleitung umfasst eine Rohfluidleitung 12, in der das ungefilterte Fluid wie bspw. Wasser zum Filterabschnitt 40 der Zuführleitung gefördert wird. Im Filterabschnitt wird das Rohfluid dann durch den Filter 20 gefiltert und in den Filtratbereich 40 gebracht. Die Zuführleitung kann eine oder auch mehrere Rohfluidleitungen 12 umfassen, die dann an einem oder mehreren Filtratbereichen 40 angebracht sind. Die Rohfluidleitung 12 und auch alle anderen Leitungen sind in den dargestellten Ausführungsformen als Rohrleitungen ausgebildet, die ein oder mehrere Rohre umfassen können.

Der Filter 20 umfasst vorzugsweise eine Vielzahl von übereinander gelegten gewickelten Flachmembranen oder nebeneinander angeordneten Hohlfasermembranen, durch die das Fluid gedrückt wird und die dann die zu filternden Bestandteile aus dem Wasser aufnehmen. Besonders bevorzugt sind Hohlfasermembranen. Der Filter 20 ist daher in der Regel spezifisch für den jeweiligen Zweck vorgesehen und kann feiner oder gröber ausgebildet sein. Insbesondere ein Filter 20 aus einer Vielzahl von Membranen ist anfällig für die Beschädigung durch den Sog, der durch die Hauptströmung in der Filtratsammelleitung 80 oder durch das Ausspülen des Filters bei der Reinigung entsteht. Der Filter 20 trennt in der Zuführleitung den Rohfluidbereich 12 vom Filtratbereich 40, in dem sich das gefilterte Fluid nach dem Filtern befindet.

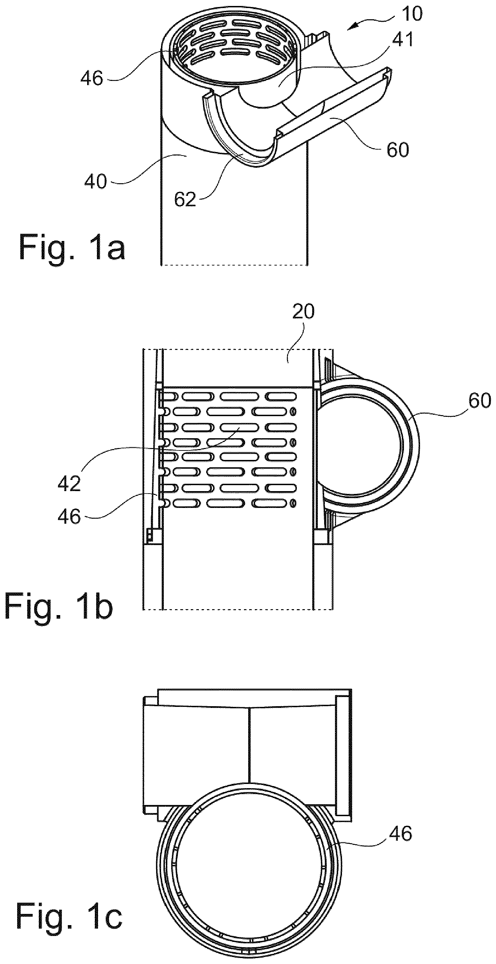

Der Filtratbereich 40 ist der Teil der Zuführleitung 10, der nach dem Filter angeordnet ist und aus dem das Filtrat dann in die Filtratsammelleitung 60 geleitet wird. Eine Ausführungsform des Filtratbereichs ist in Figur 1 dargestellt. Figur 1a zeigt eine isometrische Ansicht auf einen Querschnitt durch das Verbindungselement, in Figur 1b ist ein Längsschnitt dargestellt, in dem auch der Filter 20 gezeigt ist und Figur 1c ist eine Draufsicht auf den Filter 20. Im Filtratbereich 40 ist zumindest eine Auslassöffnung 42 vorgesehen, durch die das Filtrat ausgeleitet wird. In der in Figur 1 gezeigten Ausführungsform sind eine Vielzahl von Auslassöffnungen 42 vorhanden, die als schlitzförmige Langlöcher ausgebildet sind. Es ist aber auch möglich, nur eine größere Auslassöffnung 42 bereitzustellen. Bevorzugt sind die Auslassöffnungen 42 benachbart zum Filter 20 angeordnet. Es können ferner auch mehrere Auslassöffnungen 42 in jeweils größerem Abstand vorgesehen sein, so dass ein Filtratbereich 40 mehrere Filtratsammelleitungen 80 befüllen kann.

Am Filtratbereich 40 ist im Bereich der Auslassöffnung 42 ein Verbindungselement 60 angeordnet. Das Verbindungselement 60 verbindet die Auslassöffnung 42 mit der Filtratsammelleitung 80. In der dargestellten Ausführungsform ist das Verbindungselement 60 ein eigenständiges Element, er kann aber auch Teil des Filtratbereichs 40, Teil der Filtratsammelleitung 80 oder Teil der Rohfluidleitung und einstückig mit diesen ausgebildet sein. Das Verbindungselement 60 weist in der Ausführungsform von Figur 1 zwei Verbindungsflansche oder Verbindungsstellen 62 auf, an denen Rohre der Filtratsammelleitung 80 befestigt werden können. Das Verbindungselement 60 umschließt den Filtratbereich 40 an den Auslassöffnungen 42 derart, dass eine Wand vor der oder den Auslassöffnungen 42 einen vergleichsweise engen Spalt 46 ausbildet. Der Spalt 46 ist bei den üblichen Maßen solcher Leitungsanordnungen an der breitesten Stelle vorzugsweise 10 cm bis 20 cm oder weniger, möglicherweise auch nur 7 cm oder weniger. Ferner verjüngt sich der Spalt 46 vorzugsweise, insbesondere von der dem Filter 20 weiter entfernt gelegenen Position zum Filter hin, d.h. in der Nähe des Filters ist der Spalt schmaler ausgebildet, so dass direkt am Filter 20 weniger Fluid aus dem Filtratbereich 40 in das Verbindungselement 60 strömen kann. Der Spalt 46 ist überall an den Auslassöffnungen 42 vorgesehen. An den Stellen aber, an denen kein Spalt vorhanden ist, sind keine Auslassöffnungen 42 vorgesehen. In Figur 1a ist dies gut in dem aufgeschnittenen Verbindungselement 60 zu erkennen. Die Rohrwand 41 des Filtratbereichs 40, die in den Durchmesser des Verbindungselements 60 gerichtet ist, der mit der Filtratsammelleitung 80 verbunden ist und in dem die Strömung am größten ist, weist keine Auslassöffnungen 42 auf.

Die Filtratsammelleitung 80 ist in Höhe des Filtratbereichs 40 angeordnet, insbesondere in Höhe der Auslassöffnung 40. Vorzugsweise verläuft die Filtratsammelleitung 80 in den Figuren waagrecht, also senkrecht zum Filtratbereich 40. Die Filtratsammelleitung 80 nimmt das Filtrat, das aus den Auslassöffnungen 42 austritt, über das Verbindungselement 60 auf und leitet das Filtrat dann für die weitere Verwendung oder Speicherung in entsprechende Tanks ab.

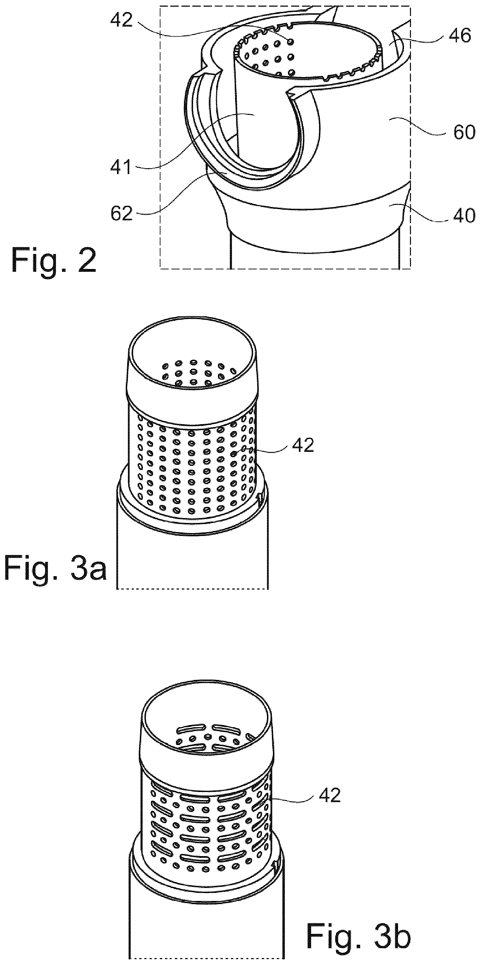

Figur 2 zeigt eine andere Ausführungsform der Auslassöffnungen 40 und des Verbindungselementes 60. Das Prinzip ist das gleiche, die Anordnung der Mittelachse der Filtratsammelleitung 80 und die Form der Auslassöffnungen aber eine andere. Die Auslassöffnungen sind hier als kreisrunde Löcher ausgebildet, die wie bei allen anderen Ausführungsformen ausschließlich an den Seiten angeordnet sind, die nicht zur Mittelachse der Filtratsammelleitung 80 gerichtet sind. Hier sind dies zwei Flächen 41 (eine vorne, eine hinten), da die Filtratsammelleitung 80 in Bezug auf den Filtratbereich 40 mittig angeordnet ist (die Mittelachsen der Filtratsammelleitung 80 und des Filtratbereichs 40 schneiden sich). Dementsprechend liegt der Filtratbereich 40 genau im Hauptstrom des Filtrats, das durch die Filtratsammelleitung 80 fließt, und nur an den Seiten ist der Spalt zwischen Auslassöffnungen 42 und Verbindungselement 60 vorhanden.

In den Figuren 3a und 3b sind zwei weitere Möglichkeiten der Auslassöffnungen dargestellt. In Figur 3a sind die Auslassöffnungen wie in Figur 2 als kreisförmige Löcher ausgebildet. In Figur 3b sind Reihen von kreisförmigen Löchern und schlitzförmigen Langlöchern abwechselnd angeordnet, wobei auch innerhalb einer Reihe kreisförmige und schlitzförmige Löcher abwechselnd oder beliebig gemischt werden können. Ein weiterer Unterschied bei diesen Ausgestaltungen der Auslassöffnungen 42 ist, dass diese leicht nach innen versetzt angeordnet sind. Dies kann das Montieren und Befestigen des Verbindungselements 60 an einer fest definierten Position erleichtern, weil man es an obere und untere Anschläge anlegen kann.

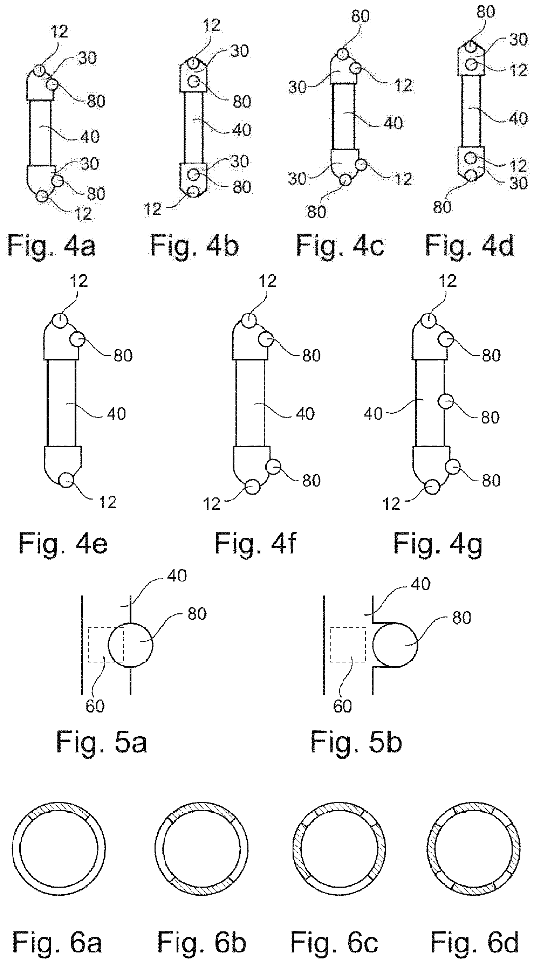

In den Figuren 4a bis 4g sind verschiedene Ausführungsformen der Leitungsanordnung abgebildet, die sich in der Anzahl und der Anordnung der Filtratsammelleitungen 80 und der Rohfluidzuführleitungen 12 unterscheiden, die jeweils an dem Filtratbereich 40 vorgesehen sind. Hier sind die Rohfluidleitungen 12 jeweils oben und unten dargestellt. Die beiden Enden des Filtratbereichs 40 sind jeweils mit einem Deckel 30 versehen, der auch einstückig mit dem Verbindungselement 60 ausgebildet sein kann. Der Filtratbereich 40 ist dann sowohl oben als auch unten mit einem Filter 20 versehen. Es kann auch ein Filter 20 für jede Rohfluidleitung 12 vorgesehen sein. In Figur 4a ist eine Anordnung gezeigt, bei der die Rohfluidleitung 12 der Zuführleitung an den äußeren Enden liegen, die Filtratsammelleitung 80 weiter innen. Diese Anordnung ist eine asymmetrische Anordnung, weil die Filtratsammelleitung 80 auch noch tangential an den Filtratbereich anliegt, bei der der Querschnitt der Filtratsammelleitung 80 mit dem Filtratbereich nur teilweise oder gar nicht überlappt. Figur 4b ist dagegen symmetrisch angeordnet, weil die der Querschnitt der Filtratsammelleitung 80 komplett mit dem Filtratbereich 40 überlappt, insbesondere sich die beiden Mittelachsen von Filtratsammelleitung 80 und Filtratbereich 40 sogar schneiden. Figur 4c ist wieder eine asymmetrische und Figur 4d eine symmetrische Anordnung, bei der die Filtratsammelleitung 80 an den äußeren Enden liegt und die Rohfluidleitung 12 der Zuführleitung weiter innen am Filtratbereich.

In Figur 4e, 4f und 4g sind nur asymmetrische Anordnungen dargestellt, die jeweils nur eine Filtratsammelleitung 80 (Fig. 4e), zwei Filtratsammelleitungen 80 (Fig. 4f) oder drei Filtratsammelleitungen 80 (Fig. 4g) aufweisen. Diese Anordnungen können selbstverständlich auch symmetrisch ausgebildet werden.

Die Figuren 5a und 5b zeigen zwei mögliche Ausbildungen von asymmetrischen Anordnungen. In Figur 5a weist die Filtratsammelleitung 80 eine Überlappung mit dem Filtratbereich auf. Das beschränkt einerseits die Ausbildung der Auslassöffnungen 42 am Filtratbereich 40 oder zwingt eine stärkere Ausbildung des Verbindungselements 60 um eine ausreichend widerstandsfähige Schutzwand für den Spalt auszubilden. Andererseits wird gerade bei größeren Anlagen der wesentlich weniger Platz benötigt. Bei der in Figur 5b gezeigten Ausführungsform, bei der die Filtratsammelleitung 80 mit ihrem gesamten Querschnitt seitlich am Filtratbereich vorbeigeht, ist es gerade anders herum. Der Bereich, in dem die Auslassöffnungen 42 unproblematisch ausgebildet werden können, vergrößert sich, aber der Platzbedarf der Anlage wird ebenfalls größer. Je mittiger die Filtratsammelleitung 80 angeordnet ist, desto weniger Platzbedarf hat sie, aber desto weniger Fläche ist für die Auslassöffnungen 41 vorgesehen. Dies gilt natürlich auch für die symmetrische Anordnung.

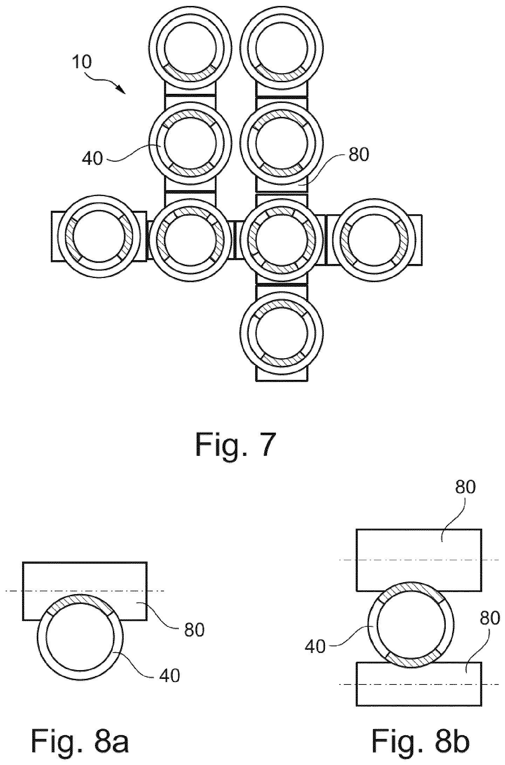

In den Figuren 6a bis 6d sind schematische Querschnitte auf den Abschnitt des Filtratbereichs 40 dargestellt, in dem die Auslassöffnungen 42 vorgesehen sein können. Diese Ausführungen betreffen die symmetrische Ausgestaltung, bei der die Filtratsammelleitungen 80 mittig auf den Filtratbereich 40 treffen. Die dunklen Bereiche liegen in der Strömung, weswegen an diesen Stellen keine Auslassöffnungen 42 vorhanden sind oder das Verbindungselement 60 verstärkt sein muss, um die Strömung von einer direkten Einwirkung auf den Filter 20 abzuhalten. Figur 7 zeigt eine schematisch dargestellte Leitungsanordnung 10, die aus einer Vielzahl von Filtratsammelleitungen 80 und Filtratbereichen 40 aus den Figuren 6a bis 6d ausgebildet ist.

In Figur 8a ist asymmetrische Anordnung der Filtratsammelleitungen 80 und des Filtratbereichs 40 in einer Querschnittansicht gezeigt. In Figur 8b ist diese asymmetrische Anordnung verdoppelt, also auf beiden Seiten des Filtratbereichs vorgesehen (technisch gesehen wäre sie dann ebenfalls symmetrisch).

### Bezugszeichenliste:

Leitungsanordnung 10
Rohfluidleitung 12
Filter 20
Deckel 30
Filtratbereich 40
öffnungslose Rohrwand 41
Auslassöffnungen 42
Spalt 46
Verbindungselement 60
Verbindungsflansch 62
Filtratsammelleitung 80

## Patentansprüche

1. Leitungsanordnung (10) für ein Filtrationssystem zum Filtrieren von Flüssigkeiten, umfassend:
zumindest eine Zuführleitung, die einen Filter (20) aufweist, durch den das in der Zuführleitung geförderte Fluid gefiltert wird und der die Zuführleitung in eine Rohfluidleitung (12) und einen Filtratbereich (40) teilt, wobei die Zuführleitung im Filtratbereich (40) einen Auslassabschnitt aufweist, der durch eine oder mehrere Auslassöffnungen (42) in einer Wand des Filtratbereichs (40) ausgebildet ist;
eine Filtratsammelleitung (80), die das Filtrat aus dem Filtratbereich (40) der Zuführleitung aufnimmt und ableitet, wobei die Filtratsammelleitung (80) in der Höhe des Filtratbereichs (40) der Zuführleitung angeordnet ist; und
ein Verbindungselement (60), das die Filtratsammelleitung (80) mit dem Auslassabschnitt der Zuführleitung verbindet, wobei das Filtrat aus dem Filtratbereich (40) über das Verbindungselement (60) in die Filtratsammelleitung (80) gelangt und wobei das Verbindungselement (60) einen Spaltbereich (46) aufweist und die Auslassöffnungen (42) ausschließlich an dem Spaltbereich (46) vorgesehen sind.

2. Leitungsanordnung (10) nach Anspruch 1, bei die Strömungsrichtung des Fluids in der Filtersammelleitung (80) am Verbindungselement (60) quer zum Filtratbereich (40) der Zuführleitung angeordnet ist.

3. Leitungsanordnung (10) nach einem der vorhergehenden Ansprüche, bei der die zumindest eine Auslassöffnung (42) zumindest ein Viertel des Umfangs des Filtratsbereichs (40) einfasst.

4. Leitungsanordnung (10) nach einem der vorhergehenden Ansprüche, bei der das Verbindungselement (60) als separates Element ausgebildet ist.

5. Leitungsanordnung (10) nach einem der vorhergehenden Ansprüche, bei der die Zuführleitung ferner eine Vielzahl von Filtratbereichen (40) umfasst, die in Reihe jeweils mit der Filtratsammelleitung (80) verbunden sind.

6. Leitungsanordnung (10) nach einem der vorhergehenden Ansprüche, bei der der Querschnitt der Filtratsammelleitung (80) mit dem Filtratbereich (40) der Zuführleitung zumindest teilweise überlappt.

7. Leitungsanordnung (10) nach einem der vorhergehenden Ansprüche, bei der der Auslassabschnitt des Filtratbereichs (40) benachbart zum Filter (20) angeordnet ist.

8. Leitungsanordnung (10) nach einem der vorhergehenden Ansprüche, ferner umfassend zumindest eine zweite Filtratsammelleitung (80) und einen zweiten Auslassabschnitt, der beabstandet zum ersten Auslassabschnitt im Filtratbereich (40) angeordnet ist, wobei die zweite Filtratsammelleitung (80) mit dem zweiten Auslassabschnitt über ein zweites Verbindungselement (60) verbunden ist.

9. Leitungsanordnung (10) nach einem der vorhergehenden Ansprüche, ferner umfassend zumindest eine zweite Filtratsammelleitung, (80) die über das Verbindungselement (60) der ersten Filtratsammelleitung (80) mit dem Auslassabschnitt verbunden ist.

10. Leitungsanordnung (10) nach einem der vorhergehenden Ansprüche, bei der sich der Spaltbereich (46) zumindest am Auslassabschnitt verjüngt.

11. Leitungsanordnung (10) nach einem der vorhergehenden Ansprüche, bei der zumindest ein Teil der Auslassöffnungen (42) am Auslassabschnitt schlitzförmig ausgebildet sind.

12. Leitungsanordnung (10) nach einem der vorhergehenden Ansprüche, bei der die Zuführleitung eine Vielzahl von Rohfluidleitungen (12) umfasst.

13. Leitungsanordnung (10) nach einem der vorhergehenden Ansprüche, bei der der Auslassabschnitt am Filtratbereich (40) nach innen versetzt ausgebildet ist.

14. Leitungsanordnung (10) nach einem der vorhergehenden Ansprüche, bei der der Filter Hohlfasermembrane umfasst.

## Claims

1. A pipework arrangement (10) for a filtration system for filtering liquids, comprising:
at least one feed pipe having a filter (20) through which the fluid transported in the feed pipe is filtered and which splits the feed pipe into a raw fluid line (12) and a filtrate region (40), wherein the feed pipe in the filtrate region (40) has an outlet portion formed by one or more outlet openings (42) in a wall of the filtrate region (40);
a filtrate collector pipe (80), which receives and drains away the filtrate from the filtrate region (40) of the feed pipe, wherein the filtrate collector pipe (80) is arranged at the level of the filtrate region (40) of the feed pipe; and
a connecting element (60), which connects the filtrate collector pipe (80) to the outlet portion of the feed pipe, wherein the filtrate passes from the filtrate region (40) through the connecting element (60) into the filtrate collector pipe (80), and wherein the connecting element (60) has a gap region (46) and the outlet openings (42) are provided exclusively in the gap region (46).

2. The pipework arrangement (10) according to claim 1, wherein the flow direction of the fluid in the filter collector pipe (80) is arranged at the connecting element (60) transversely to the filtrate region (40) of the feed pipe.

3. The pipework arrangement (10) according to any of the preceding claims, wherein the at least one outlet opening (42) encloses at least a quarter of the circumference of the filtrate region (40).

4. The pipework arrangement (10) according to any of the preceding claims, wherein the connecting element (60) is designed as a separate element.

5. The pipework arrangement (10) according to any of the preceding claims, wherein the feed pipe further comprises a plurality of filtrate regions (40) each connected in series to the filtrate collector pipe (80).

6. The pipework arrangement (10) according to any of the preceding claims, wherein the cross-section of the filtrate collector pipe (80) at least partially overlaps with the filtrate region (40) of the feed pipe.

7. The pipework arrangement (10) according to any of the preceding claims, wherein the outlet portion of the filtrate region (40) is arranged adjacent to the filter (20).

8. The pipework arrangement (10) according to any of the preceding claims, further comprising at least one second filtrate collector pipe (80) and a second outlet portion, which is arranged at a distance from the first outlet portion in the filtrate region (40), wherein the second filtrate collector pipe (80) with the second outlet portion is connected via a second connecting element (60).

9. The pipework arrangement (10) according to any of the preceding claims, further comprising at least one second filtrate collector pipe (80), which is connected to the outlet portion via the connecting element (60) of the first filtrate collector pipe (80).

10. The pipework arrangement (10) according to any of the preceding claims, wherein the gap region (46) tapers at least at the outlet portion.

11. The pipework arrangement (10) according to any of the preceding claims, wherein at least some of the outlet openings (42) are slot-shaped at the outlet portion.

12. The pipework arrangement (10) according to any of the preceding claims, wherein the feed pipe comprises a plurality of raw fluid lines (12).

13. The pipework arrangement (10) according to any of the preceding claims, wherein the outlet portion on the filtrate region (40) is offset inwards.

14. The pipework arrangement (10) according to any of the preceding claims, wherein the filter comprises hollow-fiber membranes.

## Revendications

1. Structure de canalisation (10) pour un système de filtration afin de filtrer des liquides, comprenant :
au moins une conduite d'alimentation qui comprend un filtre (20) à travers lequel le fluide transporté dans la conduite d'alimentation est filtré et qui divise la conduite d'alimentation en une conduite de fluide brut (12) et une zone de filtrat (40), la conduite d'alimentation comprenant, dans la zone de filtrat (40), une section de sortie formée par une ou plusieurs ouvertures de sortie (42) dans une paroi de la zone de filtrat (40) ;
une conduite collectrice de filtrat (80) qui reçoit et évacue le filtrat de la zone de filtrat (40) de la conduite d'alimentation, la conduite collectrice de filtrat (80) étant située au niveau de la zone de filtrat (40) de la conduite d'alimentation ; et
un élément de liaison (60) qui relie la conduite collectrice de filtrat (80) à la section de sortie de la conduite d'alimentation, le filtrat provenant de la zone de filtrat (40) arrivant dans la conduite collectrice de filtrat (80) par l'intermédiaire de l'élément de liaison (60) et l'élément de liaison (60) présentant une zone de fente (46) et les ouvertures de sortie (42) étant prévues exclusivement sur la zone de fente (46).

2. Structure de canalisation (10) selon la revendication 1, dans laquelle le sens d'écoulement du fluide dans la conduite collectrice de filtre (80) est disposé sur l'élément de liaison (60) transversalement à la zone de filtrat (40) de la conduite d'alimentation.

3. Structure de canalisation (10) selon l'une quelconque des revendications précédentes, dans laquelle l'au moins une ouverture de sortie (42) entoure au moins un quart de la périphérie de la zone de filtrat (40).

4. Structure de canalisation (10) selon l'une quelconque des revendications précédentes, dans laquelle l'élément de liaison (60) est réalisé sous la forme d'un élément séparé.

5. Structure de canalisation (10) selon l'une quelconque des revendications précédentes, dans laquelle la conduite d'alimentation comprend en outre une pluralité de zones de filtrat (40) reliées en série chacune à la conduite collectrice de filtrat (80).

6. Structure de canalisation (10) selon l'une quelconque des revendications précédentes, dans laquelle la section transversale de la conduite collectrice de filtrat (80) chevauche au moins partiellement la zone de nitrat (40) de la conduite a alimentation.

7. Structure de canalisation (10) selon l'une quelconque des revendications précédentes, dans laquelle la section de sortie de la zone de filtrat (40) est disposée de manière adjacente au filtre (20).

8. Structure de canalisation (10) selon l'une quelconque des revendications précédentes, comprenant en outre au moins une seconde conduite collectrice de filtrat (80) et une seconde section de sortie qui est disposée à distance de la première section de sortie dans la zone de filtrat (40), la seconde conduite collectrice de filtrat (80) étant reliée à la seconde section de sortie par l'intermédiaire d'un second élément de liaison (60).

9. Structure de canalisation (10) selon l'une quelconque des revendications précédentes, comprenant en outre au moins une seconde conduite collectrice de filtrat (80) reliée à la section de sortie par l'intermédiaire de l'élément de liaison (60) de la première conduite collectrice de filtrat (80).

10. Structure de canalisation (10) selon l'une des revendications précédentes, dans laquelle la zone de fente (46) se rétrécit au moins au niveau de la section de sortie.

11. Structure de canalisation (10) selon l'une quelconque des revendications précédentes, dans laquelle au moins une partie des ouvertures de sortie (42) est en forme de fente sur la section de sortie.

12. Structure de canalisation (10) selon l'une quelconque des revendications précédentes, dans laquelle la conduite d'alimentation comprend une pluralité de conduites de fluide brut (12).

13. Structure de canalisation (10) selon l'une quelconque des revendications précédentes, dans laquelle la section de sortie est formée de manière décalée vers l'intérieur au niveau de la zone de filtrat (40).

14. Structure de canalisation (10) selon l'une quelconque des revendications précédentes, dans laquelle le filtre comprend des membranes à fibres creuses.
